# FASCICULE DE BREVET EUROPEEN

(11) **EP 0 603 053 B1**
(45) Date de publication et mention de la délivrance du brevet: **20.09.1995**
(21) Numéro de dépôt: 93403013.1
(22) Date de dépôt: 14.12.1993
(51) Int. Cl.: G06F 11/26, H04J 3/14

(54) **Procédé de génération d'erreurs binaires et dispositif de mise en oeuvre du procédé**
Verfahren und Vorrichtung zum Erzeugen von Binärefehler
Method and apparatus for generating binary errors

(30) Priorité: 16.12.1992 FR 9215175
(43) Date de publication de la demande: 22.06.1994
(73) Titulaire: FRANCE TELECOM, 75015 Paris (FR)
(72) Inventeur: Houdoin, Thierry, F-75116 Paris (FR); Wipliez, Christian, F-75116 Paris (FR)
(74) Mandataire: Schmit, Christian Norbert Marie

(56) Documents cités:
- EP-A- 0 305 036
- US-A- 4 669 081
- IEEE DESIGN & TEST OF COMPUTERS vol. 5, no. 3 , Juin 1988 , LOS ALAMITOS US pages 31 - 42 GHOSH S. 'Behavioral-level fault simulation'
- CONFERENCE PROCEEDINGS 1991 IEEE INTERNATIONAL CONFERENCE ON SYSTEMS, MAN AND CYBERNETICS CHARLOTTESVILLE, VIRGINIA, US pages 2055 - 2060 GHOSH S. 'NODIFS: A Novel, distributed circuit-partitioning based algorithm for fault simulation of combinational and sequential digital designs on loosely-coupled paralel processors'

## Description

L'invention concerne un procédé de génération d'erreurs binaires dans un signal numérique incident pour notamment simuler des erreurs dues à la transmission de ce signal sur un réseau donné.

L'invention concerne également un dispositif de génération d'erreurs binaires.

L'invention s'applique en particulier à la fabrication de simulateurs de réseau de transmission.

On ne connaît pas aujourd'hui de système qui permette de réaliser une génération d'erreurs binaires permettant de s'approcher des caractéristiques réelles d'un réseau de transmission quelque soit le réseau.

La présente invention s'applique à la génération d'erreurs binaires pour tout type de réseau et notamment pour un réseau ATM ( Asynchronous Transfert Mode).

On rappelle à ce propos qu'un réseau ATM permet la transmission d'informations numériques ayant des débits variés et pouvant être importants allant jusqu'à 155 Mbit/s.

On rappelle également que la transmission mode ATM se fait par transfert de blocs d'informations de longueur constante. La quantité élémentaire d'informations transmises est de 48 octets; le bloc d'informations transmis en ATM est dénommé cellule et est identifié dans le temps par une étiquette de 5 octets. La longueur totale d'une cellule est donc de 53 octets.

On rappelle également que deux autres grandes classes de modes de transmissions numériques existent également à l'heure actuelle. Il s'agit du mode circuit à 64K bit/s et du mode paquet utilisé par exemple par le réseau Transpac.

De façon plus précise, l'invention concerne un procédé de génération d'erreurs binaires dans un signal numérique incident ayant un format et ayant un débit correspondant aux normes de transmission d'un réseau donné, principalement caractérisé en ce qu'il comporte les étapes suivantes :
- enregistrer un ou plusieurs modèles d'erreurs prédéterminés;
- charger dans des moyens de mémorisation à lecture et écriture le modèle désiré de manière à obtenir un signal numérique de génération d'erreurs par lecture de ces moyens de mémorisation,
- combiner le signal de génération d'erreurs au signal incident de manière à introduire des erreurs sur des éléments binaires de ce signal.

Selon une autre caractéristique de l'invention, la combinaison des signaux consiste à inverser des éléments binaires du signal incident pendant la présence du signal de génération d'erreurs.

Selon l'invention chaque modèle est prédéterminé soit à partir de lois mathématiques par exemple la loi de Poisson ou autre, soit à partir de mesures effectuées sur une transmission réelle sur ledit réseau.

Selon un autre aspect de l'invention le signal numérique de génération d'erreurs est constitué de mots correspondants à des motifs d'erreurs et le chargement dans les moyens de mémorisation consiste d'une part à charger ces motifs et d'autre part à charger la distance entre les motifs c'est à dire le nombre de fois que doit être répété chaque motif, l'opération de lecture du motif consistant alors à lire successivement autant de fois que l'indique le nombre mémorisé pour ce motif.

L'invention concerne également un dispositif de génération d'erreurs binaires dans un signal numérique incident ayant un format et un débit correspondant aux normes d'un réseau de transmission donné principalement caractérisé en ce qu'il comporte :
- des premiers moyens de mémorisation dans lesquels sont enregistrés un ou plusieurs modèles prédéterminés de génération d'erreurs,
- des deuxièmes moyens de mémorisation à lecture et écriture dans lesquels on charge au moment voulu le modèle désiré de manière à obtenir un signal numérique de génération d'erreurs par lecture de ces deuxièmes moyens de mémorisation,
- des moyens de commande aptes à commander des opérations de lecture et d'écriture des deuxièmes moyens de mémorisation,
- des moyens de combinaison du signal incident et du signal de génération d'erreurs obtenu par lecture dans les deuxièmes moyens de mémorisation.

Selon un autre aspect de l'invention les moyens de mémorisation comportent une première et une deuxième zone mémoire, le signal d'erreurs est constitué de mots correspondant à des motifs d'erreurs, ces motifs étant chargés dans la première zone mémoire, la deuxième mémoire comportant des mots correspondant aux nombres de fois que doit être lu successivement un motif; le dispositif comportant en outre un compteur d'adresse permettant d'adresser les mémoires, ce compteur étant incrémenté après attente du nombre de cycle obtenu la deuxième zone mémoire.

Selon une autre caractéristique de l'invention le dispositif comporte en outre lorsqu'on veut simuler un réseau ATM des moyens de codage de correction d'erreurs sur les en-têtes de cellules et des moyens de décodage de correction d'erreurs de ces mêmes en-têtes placés respectivement en amont et en aval des moyens de combinaison.

D'autres particularités et avantages de l'invention apparaîtront à la lecture de la description qui est faite à titre illustratif et non limitatif et en regard des figures sur lesquels :
- la figure 1 représente un schéma de réalisation d'un dispositif conforme à l'invention,
- la figure 2 représente un schéma du dispositif selon une variante de réalisation adaptée plus particulièrement au réseau ATM.

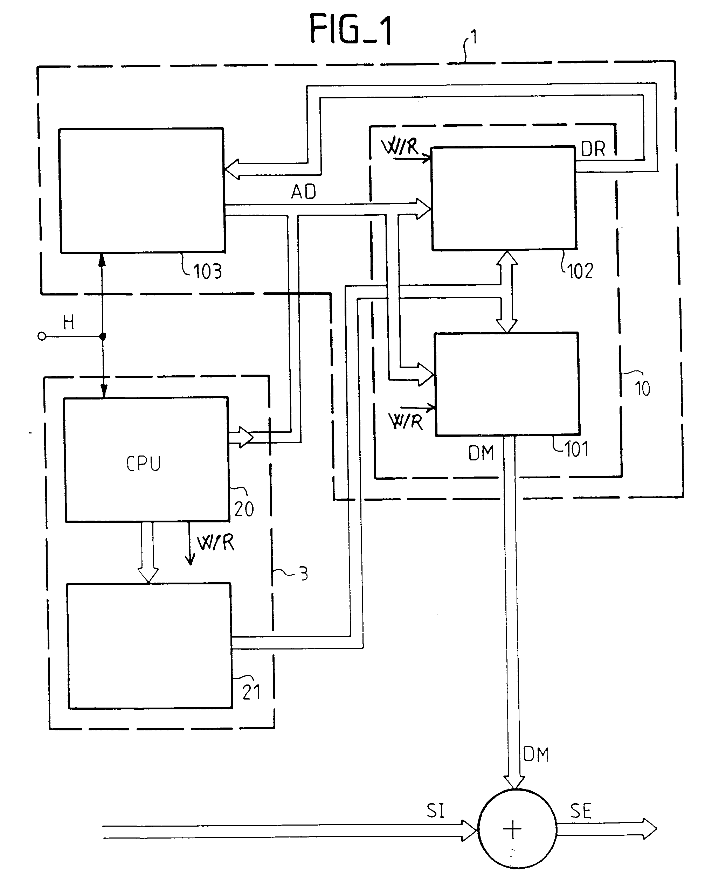

Le dispositif conforme à l'invention et représenté sur la figure 1, comporte des moyens de mémorisation 1 commandés en lecture et écriture par des moyens de commande 3 comportant une unité centrale de traitement 3. Cette unité centrale de traitement 3 est associée à des moyens de mémorisation de programmes et de données permettant de mettre en oeuvre le procédé. Dans ces moyens de mémorisation sont préalablement enregistrés un ou plusieurs modèles de génération d'erreurs.

Chaque modèle enregistré est défini par une loi mathématique connue. On peut citer à ce titre une loi telle que la loi de Poisson. Les modèles enregistrés peuvent aussi être le résultat de mesure effectuées lors de transmissions réelles sur les différents réseaux.

On dispose ainsi de modèles relatifs à tout réseau de transmission. Pour procéder à la génération d'erreurs binaires sur un signal incident de format et de débit correspondant à celui d'une transmission sur un réseau donné, on charge le modèle d'erreurs correspondant à la transmission sur ce réseau dans les moyens de mémorisation 1. Le chargement est réalisé par l'unité centrale de traitement qui commande pour cela l'écriture du modèle dans ces moyens de mémorisation et qui commande ensuite la lecture du modèle enregistré au rythme d'arrivée des données du signal incident.

Les données lues dans les moyens de mémorisation au rythme du signal incident SI sont combinées de manière à fournir un signal SE reproduisant les caractéristiques de transmission du réseau choisi.

Un tel signal SE permet en effet de simuler une transmission sur ce réseau.

La combinaison des deux signaux consiste à inverser l'état logique des éléments binaires du signal incident SI quand les éléments binaires du signal de génération d'erreurs DM sont actifs.

En effet le modèle chargé dans les moyens de mémorisation de génération d'erreurs 1 se présente sous la forme d'éléments binaires se trouvant à l'état logique 0 ou 1 selon la convention adoptée pour obtenir une erreur ou pas d'erreur sur le signal incident.

Selon la convention adoptée dans la réalisation pratique on a choisi de mémoriser un zéro lorsque l'on ne veut pas générer d'erreur et de mémoriser un 1 lorsque l'on veut générer une erreur.

On rappelle ici que le taux d'erreurs sur des réseaux de transmission est généralement faible de l'ordre de 10⁻¹⁰. Même dans le cas où l'on prend un taux d'erreur de 10⁻⁶, ce qui est considéré comme excessif, cela se traduit par un million de bit à zéro dans la mémoire puis 1 bit à 1 et ainsi de suite si le modèle est récurant. La taille mémoire requise peut donc être considérable.

Ainsi conformément à un autre aspect de l'invention pour éviter d'avoir à utiliser une mémoire de très grande capacité pour la mémorisation du modèle qui va être lu au rythme du signal incident, on utilise un codage donnant deux types d'informations que l'on a représenté pour faciliter la compréhension, par deux zones mémoire distinctes sur la figure 1, mais qui bien entendu peuvent être sur un seul composant mémoire. Le premier type d'information est constitué de mots correspondants à des motifs d'erreurs et l'autre à la distance entre les erreurs. Ainsi au lieu de stocker un motif d'erreur 0 ou 1 correspondant à chaque bit du train incident on a choisi de coder le nombre de fois que va être répété un motif d'erreur, le motif d'erreur valant 0 lorsqu'il n'y a pas d'erreur selon la convention qui a été prise. De longues séquences sans erreur peuvent ainsi être codées avec beaucoup moins de bits.

Comme cela a été expliqué ci-dessus on a représenté sur la figure 1 les moyens de mémorisation 1, ces moyens comportant une mémoire 10 comprenant une zone mémoire de motif 101 et une zone mémoire de répétition 102. Un compteur d'adresse 103 est également prévu pour adresser en lecture les mémoires 101 et 102 par le bus d'adresse AD.

L'unité centrale de traitement 3 est réalisée par exemple par un microprocesseur 20 associé à des périphériques non représentés mais classiques. Seule, une mémoire programmable 21 à lecture est représentée. Cette mémoire est du type mémoire ROM et comporte les modèles préalablement enregistrés.

Selon un exemple de réalisation pratique les modèles se présentent sous la forme d'un ensemble de motifs d'erreurs correspondant à des mots de 8 bits. A chaque motif d'erreur correspond un mot de 16 bits permettant de coder le nombre de fois que le motif associé doit être répété lors de la génération d'erreurs.

Un bus de donnée D permet de charger la mémoire de motifs d'erreurs 101, des données DM et la mémoire de répétition 102 des données issues de la mémoire 20. L'unité centrale donne pour cela un ordre d'écriture dans ces mémoires au moyen du signal de commande W/R. L'adressage des mémoires 101 et 102 pendant l'écriture est réalisée par l'unité centrale au moyen du bus d'adresse AD.

En revanche l'adressage des mémoires 101 et 102 pour une lecture est réalisée par le compteur 103 au moyen du bus d'adresse AD sur commande également du signal W/R.

Le compteur 103 est piloté par une horloge externe H correspondant au rythme d'arrivée des données du signal incident SI. A l'initialisation le compteur est pointé à la première adresse des mémoires 101 et 102 et est chargé par la valeur contenue à la première adresse de la mémoire de répétition 102. Le compteur reste à cette adresse jusqu'à ce que la valeur chargée dans ce compteur revienne par décrémentation à la position initiale du compteur. Le compteur passe alors à l'adresse suivante.

Ainsi le mot mémorisé à une adresse donnée dans la mémoire 101 est répété autant de fois que l'indique la valeur mémorisée dans la mémoire 102 à l'adresse pointée par le compteur. Le compteur passe à l'adresse suivante dès qu'il se retrouve à sa position initiale. Les mots DM lus dans la mémoire 101 sont combinés au signal incident SI à la cadence d'arrivée de ce signal et permettent d'obtenir un signal SE ayant les caractéristiques d'un signal transmis par un réseau de transmission donné.

La combinaison du signal SI et des motifs d'erreur DM est obtenu par une porte logique 2 du type OU exclusif qui permet d'inverser des bits de ce signal quand les bits d'erreur sont actifs.

La mémoire de répétition 102 et la mémoire de motif 101 peuvent bien entendu être réalisées à partir d'un seul composant mémoire. A titre d'exemple si l'on dispose d'un composant mémoire organisé en 256 kmots de 4 bits cela conduit à disposer d'une mémoire d'erreur de 256 kmots de 24 bits selon l'exemple qui a été pris précédemment, la répétition étant codée sur 16 bits et les motifs d'erreur sur 8 bits.

Une telle configuration permet d'atteindre un taux d'erreur minimum de 7,3 10⁻¹² soit une période de répétition de 15 minutes environ et cela dans des conditions optimales c'est à dire pour une seule erreur dans le flux.

Pour un modèle d'erreur plus complexe, on peut par exemple envisager un modèle d'erreur avec 10¹⁰ bits sans erreur puis 4 erreurs consécutives puis 100 bits corrects puis 10⁵ bits avec un taux d'erreur moyen de 10-³. Une telle séquence occupera environ 19300 mots en mémoire sur les 262144 disponibles (256 x 1024 mots). Sans codage de la distance entre deux erreurs comme cela vient d'être décrit un tel modèle occuperait environ 1,25 10⁶ octets de mémoire.

Ce dispositif permet de générer une séquence d'une taille maximale de 1,37 10¹¹ bits avec une mémoire limitée à 6,3 10⁶ bits de mémoire.

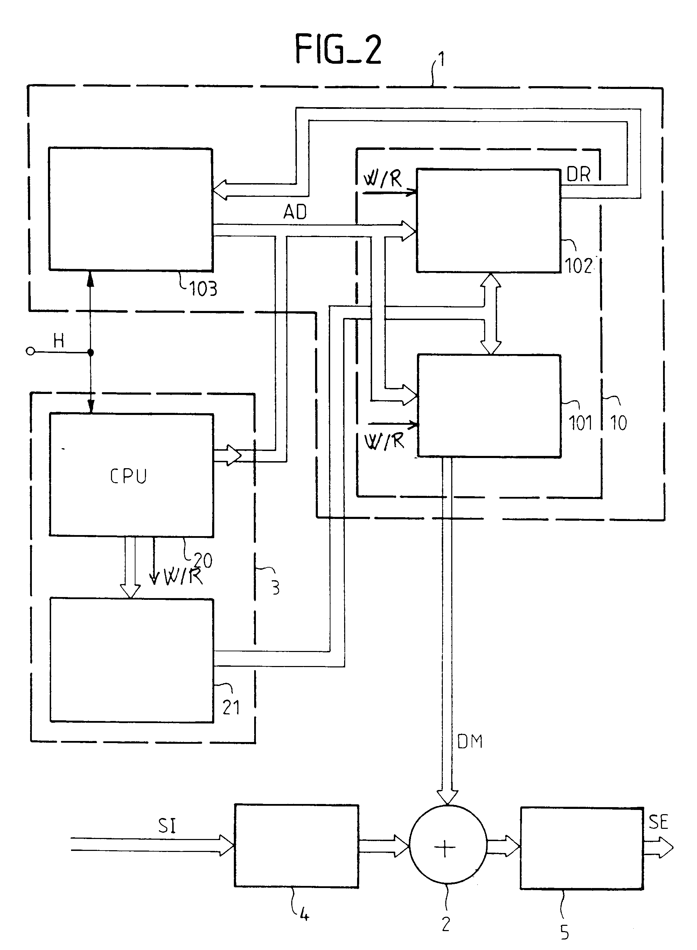

On a représenté sur la figure 2 une variante de réalisation du dispositif conforme à l'invention. Cette variante, permet de s'approcher au mieux d'une transmission en mode ATM et permet de ce fait de simuler au mieux une transmission sur réseau ATM.

Le dispositif comporte alors des moyens de génération d'un code correcteur d'erreurs 4 placés en amont des moyens de combinaison 2 et il comporte également des moyens de décodage 5 de ce code de correction d'erreurs placé en aval de ces moyens 2.

Ainsi les moyens de génération du code correcteur d'erreurs 4 vont permettre de protéger grâce à ce code les octets de l'en-tête des cellules du signal incident de format ATM tel que préconisé par la norme ATM.

Ce code va par conséquent permettre de corriger les erreurs qui peuvent être générées à partir du dispositif sur l'en-tête des cellules.

Pour répondre à la norme ATM cette correction n'est faite que sur une seule erreur par en-tête. Lorsque plus d'une erreur est détectée par les moyens de décodage du code correcteur d'erreurs la cellule est détruite comme cela est préconisée par la norme ATM.

Les circuits utilisés pour réaliser la génération du code correcteur d'erreurs et le décodage de ce code correcteur d'erreurs sont des circuits que l'on peut trouver dans le commerce.

A titre d'exemple de réalisation pratique on pourra prendre par exemple un circuit Xilinx (3020PC68) pour réaliser la génération du code correcteur d'erreur et un circuit Xilinx (3042PG132) pour réaliser le décodage du code correcteur d'erreurs.

A titre d'exemple également les moyens de mémorisation 10 peuvent être réalisés par une mémoire de type RAM vidéo. Le port données parallèles est utilisé par l'unité centrale de traitement pour les accès en écriture et le port série est utilisé comme accès en lecture seule pour la sortie des données au rythme du bus ATM.

## Revendications

1. Procédé de génération d'erreurs binaires dans un signal numérique incident de format et de débit correspondant aux normes de transmission d'un réseau donné, caractérisé en ce qu'il comporte les étapes suivantes :
- enregistrer un ou plusieurs modèles prédéterminés de génération d'erreurs;
- charger dans des moyens de mémorisation à lecture et écriture le modèle désiré de manière à obtenir un signal numérique de génération d'erreur par lecture de ces moyens de mémorisation, le signal numérique de génération d'erreur étant constitué de mots correspondant à des motifs d'erreur, le chargement dans les moyens de mémorisation consistant d'une part à charger ces motifs et d'autre part à charger le nombre de fois que doit être répété chaque motif et l'opération de lecture consistant à lire successivement autant de fois le motif que l'indique le nombre mémorisé pour ce motif,
- combiner le signal de génération d'erreur au signal incident au rythme d'arrivée des éléments binaires de ce signal incident, de manière à introduire des erreurs sur des éléments binaires de ce signal.

2. Procédé de génération d'erreurs binaires selon la revendication 1, caractérisé en ce que la combinaison des deux signaux consiste à inverser l'état logique des éléments binaires du signal incident pendant la présence du signal de génération d'erreur.

3. Procédé de génération d'erreurs binaires selon la revendication 1 ou 2, caractérisé en ce que chaque modèle est prédéterminé à partir d'une loi mathématique et/ou à partir de mesures effectuées lors d'une transmission sur ledit réseau.

4. Procédé de génération d'erreurs binaires selon l'une quelconque des revendications 1 à 3, caractérisé en ce que le réseau est un réseau ATM, en ce que le signal incident comporte des blocs d'informations transmis sous la forme de cellules constituées d'octets d'en-tête suivis d'octets d'information.

5. Procédé de génération d'erreurs binaires selon l'une quelconque des revendications précedentes, caractérisé en ce que les motifs sont des mots de 8 bits et en ce que le nombre de fois que doit être répété un octet est codé sur 16 bits.

6. Procédé de génération d'erreurs binaires selon l'une quelconque des revendications 1 à 5, caractérisé en ce qu'il consiste en outre à réaliser un codage de correction d'erreur sur le signal incident avant d'opérer la combinaison avec le signal de génération d'erreur, et en ce qu'il consiste à réaliser un décodage de correction d'erreur sur le signal obtenu après combinaison, et en ce que le codage de correction d'erreur et le décodage de correction d'erreur sont réalisés sur les en-têtes de cellules.

7. Dispositif de génération d'erreurs binaires dans un signal numérique incident de format et de débit correspondant aux normes d'un réseau de transmission donné, caractérisé en ce qu'il comporte :
- des premiers moyens de mémorisation (21) dans lesquels sont enregistrés un ou plusieurs modèles prédéterminés de génération d'erreurs,
- des deuxièmes moyens de mémorisation (10) à lecture et écriture dans lesquels est chargé le modèle désiré de manière à obtenir un signal numérique de génération d'erreur par lecture de ces deuxièmes moyens de mémorisation,
- des moyens de commande (20) aptes à commander des opérations de lecture et d'écriture dans les deuxièmes moyens de mémorisation (10),
- des moyens de combinaison du signal incident et du signal de génération d'erreur permettant de combiner ces signaux au rythme du signal incident.

8. Dispositif de génération d'erreurs binaires selon la revendication 7, caractérisé en ce que les deuxièmes moyens de mémorisation (10) comportent une première et une deuxième zone mémoire, en ce que le signal d'erreur (DM) est constitué de mots correspondant à des motifs d'erreur, ces motifs étant chargés dans la première zone mémoire, la deuxième zone mémoire comportant des mots correspondant au nombre de fois que doit être lu successivement un même motif, et en ce qu'il comporte un compteur d'adresse (103) permettant d'adresser les mémoires, ce compteur étant incrémenté après attente du nombre de cycle contenu dans la deuxième zone mémoire (102).

9. Dispositif de génération d'erreurs binaires, selon l'une quelconque des revendications précédentes caractérisé en ce qu'il comporte en outre des moyens de codage de correction d'erreur (4) placés en amont des moyens de combinaison (2) et des moyens de décodage/de correction d'erreur (5) placés en aval des moyens de combinaison.

10. Dispositif de génération d'erreur binaire, selon l'une quelconque des revendications précédentes, caractérisé en ce que les moyens de combinaison sont réalisés par un OU exclusif.

## Patentansprüche

1. Verfahren zum Erzeugen von Binärfehlern in einem eintreffenden Digitalsignal, dessen Format und Übertragungsgeschwindigkeit den Übertragungsnormen eines gegebenen Netzes entspricht,
**dadurch gekennzeichnet**,
daß es die folgenden Schritte umfaßt:
- Aufzeichnen von einem oder mehreren festgelegten Fehlererzeugungsmustern;
- Laden des erwünschten Musters in Lese- und Schreib-Speichereinrichtungen, um ein Digitalsignal zur Fehlererzeugung durch Lesen dieser Speichereinrichtungen zu erhalten, wobei das Fehlererzeugungs-Digitalsignal gebildet wird durch Fehlermustern ensprechende Wörter, das Laden in die Speichereinrichtungen darin besteht, einerseits diese Muster zu laden und andererseits die Anzahl der Male zu laden, wie oft jedes Muster wiederholt werden muß und die Leseoperation, darin bestehend, nacheinander ebensooft das Muster zu lesen, wie die für dieses Muster gespeicherte Zahl angibt,
- Verknüpfen des Fehlererzeugungssignals mit dem eintreffenden Signal im Rythmus des Eintreffens der Binärelemente dieses eintreffenden Signals, um Fehler in die Binärelemente dieses Signal einzuführen.

2. Verfahren nach Anspruch 1, dadurch gekennzeichnet, daß die Verknüpfung der beiden Signale darin besteht, den logischen Zustand der Binärelemente des eintreffenden Signals umzukehren während des Vorhandenseins des Fehlererzeugungssignals.

3. Verfahren nach Anspruch 1 oder 2, dadurch gekennzeichnet, daß das Muster festgelegt wird aufgrund eines mathematischen Gesetzes und/oder aufgrund von Messungen, durchgeführt während einer Übertragung auf dem genannten Netz.

4. Verfahren nach einem der Ansprüche 1 bis 3, dadurch gekennzeichnet, daß das Netz ein ATM-Netz ist, daß das eintreffende Signal Informationsblöcke umfaßt, übertragen in Form von Zellen, gebildet durch Kopf-Bytes, gefolgt von Informationsbytes.

5. Verfahren nach einem der vorhergehenden Ansprüche, dadurch gekennzeichnet, daß die Muster 8-Bit-Wörter sind und daß die Anzahl Male, die ein Byte wiederholt werden muß, auf 16 Bits codiert ist.

6. Verfahren nach einem der Ansprüche 1 bis 5, dadurch gekennzeichnet, daß es außerdem darin besteht eine Fehlerkorrektur-Codierung an dem eintreffenden Signal durchzuführen vor der Verknüpfung mit dem Fehlererzeugungssignal, und dadurch, daß es darin besteht, eine Fehlerkorrektur-Decodierung an dem nach der Verknüfpung erhaltenen Signal durchzuführen, und dadurch, daß die Fehlerkorrektur-Codierung und die Fehlerkorrektur-Decodierung an den Zellenköpfen durchgeführt werden.

7. Vorrichtung zum Erzeugen von Binärfehlern in einem eintreffenden Digitalsignal, dessen Format und Übertragungsgeschwindigkeit den Übertragungsnormen eines gegebenen Netzes entspricht,
**dadurch gekennzeichnet,**
daß es umfaßt:
- erste Speichereinrichtungen (21), in denen ein oder mehrere festgelegte Fehlererzeugungsmuster gespeichert sind,
- zweite Lese- und Schreib-Speichereinrichtungen (10), in die das erwünschte Muster geladen wird, um durch Lesen dieser zweiten Speichereinrichtungen ein Fehlererzeugungs-Digitalsignal zu erhalten,
- Steuereinrichtungen (20), fähig, Lese- und Schreiboperationen in den zweiten Speichereinrichtungen (10) zu steuern,
- Verknüpfungseinrichtungen des eintreffenden Signals und des Fehlererzeugungssignals, die ermöglichen, diese Signale im Rythmus des eintreffenden Signals zu verknüpfen.

8. Vorrichtung nach Anspruch 7, dadurch gekennzeichnet, daß die zweiten Speichereinrichtungen (10) eine erste und eine zweite Speicherzone umfassen, daß das Fehlersignal (DM) gebildet wird durch Fehlermustern entsprechende Wörter, wobei diese Muster in die erste Speicherzone geladen werden und die zweite Speicherzone Wörter enthält, die der Anzahl Male entsprechen, die ein und dasselbe Muster nacheinander gelesen werden muß, und dadurch, daß sie einen Adressenzähler (103) umfaßt, der ermöglicht, die Speicher zu adressieren, wobei dieser Zähler inkrementiert wird nach dem Abwarten der in der zweiten Speicherzone (102) enthaltenen Anzahl Zyklen.

9. Vorrichtung nach einem der vorhergehenden Ansprüche, dadurch gekennzeichnet, daß sie außerdem Fehlerkorrektureinrichtungen (4) umfaßt, vor den Verknüpfungseinrichtungen (2) angeordnet, und Decodier-/Fehlerkorrektur-Einrichtungen (5), hinter den Verknüpfungseinrichtungen angeordnet.

10. Vorrichtung nach einem der vorhergehenden Ansprüche, dadurch gekennzeichnet, daß die Verknüfungseinrichtungen gebildet werden durch ein exklusives ODER.

## Claims

1. Method of generating binary errors in a digital incident signal of a format and speed corresponding to the transmission norms for a given network, characterised in that it includes the following steps:
- recording one or more predetermined error generation models;
- loading the desired model into read and write storage means so as to obtain a digital error-generation signal by reading these storage means, the digital error-generation signal consisting of words corresponding to error patterns, the loading into the storage means consisting on the one hand of loading these patterns and on the other hand of loading the number of times that each pattern must be repeated, and the reading operation consisting of successively reading the pattern as many times as is indicated by the number stored for this pattern,
- combining the error generation signal with the incident signal at the rate of arrival of the binary elements of this incident signal, so as to introduce errors in the binary elements of this signal.

2. Method of generating binary errors according to Claim 1, characterised in that the combination of the two signals consists of reversing the logic state of the binary elements of the incident signal during the presence of the error generation signal.

3. Method of generating binary errors according to Claim 1 or 2, characterised in that each model is predetermined from a mathematical law and/or from measurements made during a transmission over the said network.

4. Method of generating binary errors according to any one of Claims 1 to 3, characterised in that the network is an ATM network, in that the incident signal includes blocks of information transmitted in the form of cells consisting of header octets followed by data octets.

5. Method of generating binary errors according to any one of the preceding claims, characterised in that the patterns are 8-bit words and in that the number of times that an octet must be repeated is coded in 16 bits.

6. Method of generating binary errorsl according to any one of Claims 1 to 5, characterised in that it also consists of effecting an error correction coding on the incident signal before performing the combination with the error generation signal, and in that it consists of effecting an error correction decoding on the signal obtained after combination, and in that the error correction coding and the error correction decoding are effected on the cell headers.

7. Device for generating binary errors in a digital incident signal of a format and speed corresponding to the norms for a given transmission network, characterised in that it includes:
- first storage means (21) in which one or more predetermined error generation models are recorded,
- second, read and write storage means (10) in which the desired model is loaded so as to obtain a digital error-generation signal by reading these second storage means,
- control means (20) suitable for controlling read and write operations in the second storage means (10),
- means for combining the incident signal and error generation signal enabling these signals to be combined at the rate of the incident signal.

8. Binary error generation device according to Claim 7, characterised in that the second storage means (10) include a first and a second memory area, in that the error signal (DM) consists of words corresponding to error patterns, these patterns being loaded into the first memory area, the second memory area including words corresponding to the number of times that any one pattern must be read in succession, and in that it includes an address counter (103) for addressing the memories, this counter being incremented after awaiting the cycle number contained in the second memory area (102).

9. Binary error generation device according to any one of the preceding claims, characterised in that it also includes error correction coding means (4) positioned upstream of the combination means (2) and decoding/error correction means (5) positioned downstream of the combination means.

10. Binary error generation device according to any one of the preceding claims, characterised in that the combination means are produced by an exclusive OR.
